# EUROPÄISCHE PATENTSCHRIFT

(11) **EP 0 642 662 B1**
(45) Veröffentlichungstag und Bekanntmachung des Hinweises auf die Patenterteilung: **25.10.2000**
(21) Anmeldenummer: 94911951.5
(22) Anmeldetag: 23.03.1994
(51) Int. Cl.: G01N 30/60

(54) **KARTUSCHE FÜR DIE FLÜSSIGKEITSCHROMATOGRAPHIE**
LIQUID CHROMATOGRAPHY CARTRIDGE
CARTOUCHE DE CHROMATOGRAPHIE EN PHASE LIQUIDE

(30) Priorität: 26.03.1993 DE 4309798
(43) Veröffentlichungstag der Anmeldung: 15.03.1995
(73) Patentinhaber: MERCK PATENT GmbH, 64293 Darmstadt (DE)
(72) Erfinder: DELP, Axel, D-64407 Fränkisch-Crumbach (DE); JUNGBLUT, Bernd, D-64295 Darmstadt (DE); KINKEL, Joachim, D-55452 Guldental (DE)
(86) Internationale Anmeldenummer: EP9400913
(87) Internationale Veröffentlichungsnummer: WO9423294

(56) Entgegenhaltungen:
- EP-A- 0 161 493
- DE-U- 9 016 294
- GB-A- 2 162 489
- US-A- 3 804 126

## Beschreibung

Die Erfindung betrifft eine neuartige Kartusche für die Flüssigkeitschromatographie, insbesondere für die Hochdruckflüssigkeitschromatographie (HPLC).

### Stand der Technik

Die in der Flüssigkeitschromatographie benutzten Trennsäulen müssen komplett ausgetauscht werden, wenn das Sorbens unbrauchbar geworden ist. Deswegen werden zunehmend anstelle von Säulen Kartuschen-Systeme eingesetzt, bei denen lediglich das mit Sorbens gefüllte Rohr mit seinen Endstücken ausgetauscht werden muß. Die Anschlußstücke für die Elutionsmittelzu- und -ableitungen sowie die Halterungen für das Kartuschenrohr können weiterbenutzt werden. Diese Kartuschen sollen möglichst einfach aufgebaut sein. Die in den Kartuschen enthaltene Sorbenspackung muß ferner stabil sein. Beispielsweise müssen die Belastungen, die beim Versand der Kartuschen auftreten können, ohne Auswirkung auf das Trennvermögen des Sorbensbettes bleiben.

Aus DE-GM 88 03 198.5 ist eine Anordnung bekannt, bei der zylindrische Endstücke in ein mit Sorbens gefülltes Rohr eingebracht werden. Wie aus DE-GM 90 16 515 hervorgeht, besteht jedoch bei dieser Anordnung die Gefahr, daß die Endstücke aus dem Kartuschenrohr herausrutschen. Um diesen schwerwiegenden Fehler zu vermeiden, wird in DE-GM 90 16 515 vorgeschlagen, die Endstücke mit einem Ringwulst zu versehen, der in eine entsprechende Aussparung in der Innenwand des Kartuschenrohres eingreift.

Im übrigen weisen beide Formen von Kartuschenanordnungen ein Dichtelement auf, die an der Stirnfläche des Kartuschenrohres anliegt. Dadurch sind die Endstücke nicht mehr axial verschieblich. Somit ist es nicht möglich, das Sorbensbett mechanisch zu verpressen, wodurch dessen Haltbarkeit und Trenneigenschaften deutlich verbessert werden. Die Länge des Sorbensbettes muß außerdem exakt eingehalten werden, da sonst Hohlräume entstehen, durch die die Trennleistung vermindert wird. Außerdem ist es beispielsweise bei Säulen aus Glas schwierig, einen Ringwulst anzubringen.

Das Sorbensbett von Chromatographiesäulen und -kartuschen wird durch Endstücke abgeschlossen, die im wesentlichen Filterelemente, sowie Dicht- und Stützelemente enthalten. Übliche Konstruktionen derartiger Endstücke, wie sie beispielsweise aus US 5,169,522 bekannt sind, sehen stets vor, daß die Endstücke aus mehreren Teilen bestehen:
a) ein im wesentlichen zylindrischer Grundkörper, der häufig mehrteilig ausgeführt ist,
b) eine oder mehrere Dichtungen, und
c) eine Siebplatte als Filterelement.
Falls anstelle der starren Siebplatte ein Gewebe oder ähnliches als Filterelement benutzt wird, enthalten diese bekannten Endstücke noch Einspannvorrichtungen für flexible Filterelemente. Insgesamt ist die Herstellung derartiger Endstücke aufwendig.

### Aufgabe der Erfindung

Es besteht also die Aufgabe, ein vereinfachtes Kartuschenrohr, das mit Sorbens füllbar ist, bereitzustellen, wobei die Endstücke fest in das Kartuschenrohr eingebracht, jedoch trotzdem in ihrer axialen Lage an die Länge des Sorbensbettes angepaßt werden können.

### Gegenstand der Erfindung

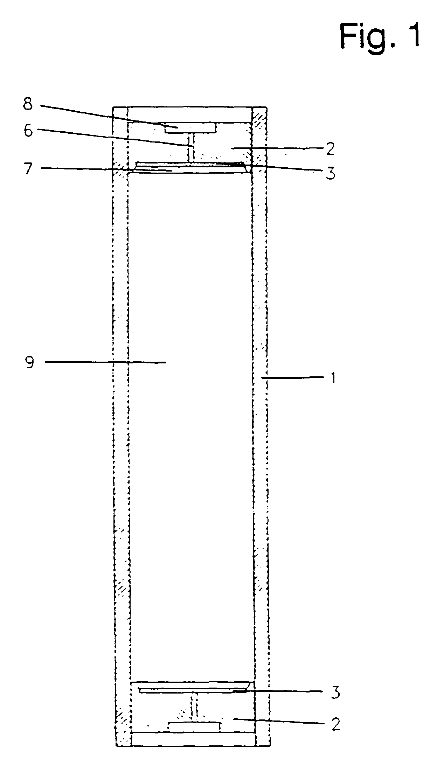

Erfindungsgemäß wird eine mit Sorbens füllbare oder gefüllte Kartusche bereitgestellt, die mit einem Endstück ausgerüstet ist, dessen Außendurchmesser ein Übermaß gegenüber dem Innendurchmesser des Kartuschenrohres aufweist, und in das ein Siebelement integriert ist. Wie aus Abbildung 1 ersichtlich, weist das erfindungsgemäße Endstück einen glatten Zylindermantel auf. Im Gegensatz dazu weisen aus dem Stand der Technik bekannte Endstücke für Chromatographiesäulen oder -kartuschen zusätzliche Dichtungselemente, wie z.B. O-Ring- oder Lippendichtungen auf. Es wird somit ein vereinfachtes Endstück mit Siebelement bereitgestellt. Das Endstück kann in beliebiger Lage entlang der Längsachse des Rohres so fest in das Kartuschenrohr eingebracht werden, daß Belastungen, wie sie beispielsweise beim Transport auftreten, ohne Auswirkung bleiben. Voraussetzung für das Einführen der Endstücke, die ein Übermaß aufweisen, ist eine Vorrichtung zum Einbringen dieser Endstücke in das Kartuschenrohr.

Gegenstand der Erfindung ist ein Endstück mit Siebelement für eine Kartusche bestehend aus einem im wesentlichen zylindrischen Grundkörper mit einer zentralen Bohrung und einer flach-zylindrischen Ausfräsung für das Siebelement, dadurch gekennzeichnet, daß der Grundkörper eine Umbördelung aufweist, die das Siebelement festhält, und daß der zylindrische Grundkörper einen glatten Zylindermantel aufweist.

Gegenstand der Erfindung ist ein Verfahren zur Herstellung des oben beschriebenen Endstückes mit Siebelement, gekennzeichnet durch folgende Verfahrensschritte:
a) Herstellen eines Rohlings aus einem Kunststoff, beispielsweise aus Teflon, mit einer zentralen Bohrung und mit einer Aussparung für das Siebelement durch übliche Formgebungsverfahren;
b) Einlegen des Siebelementes in die dafür vorgesehene Aussparung;
c) Umbördelung des Rohlings an dem Ende, an dem sich das Siebelement befindet, wobei radialer Druck zur Verformung ausgeübt wird;
d) endgültige Formgebung für das Endstück (Außendurchmesser, Anschlußvorrichtung für Elutionsmittelzu- und -ableitung).

Gegenstand der Erfindung ist ein Kartuschenrohr für die Flüssigkeitschromatographie, bestehend aus einem Rohr und einem Endstück mit Siebelement, wobei das Endstück durch Reibungskräfte in dem Rohr gehalten wird, dadurch gekennzeichnet, daß im demontierten Zustand der Außendurchmesser des Endstückes größer als der Innendurchmesser des Rohres ist.

Gegenstand der Erfindung ist auch eine Kartusche für die Flüssigkeitschromatographie, dadurch gekennzeichnet, daß ein chromatographisches Sorbens in den Innenraum eines erfindungsgemäßen Kartuschenrohres eingebracht ist, und daß das Sorbensbett an beiden Enden mit je einem Endstück mit Siebelement verschlossen ist.

Gegenstand der Erfindung ist ein Verfahren zum Einbringen eines Endstückes mit Siebelement in ein Kartuschenrohr oder eine Kartusche, wobei das Endstück mit Siebelement durch ein Führungswerkzeug, das auf das Kartuschenrohr aufgesetzt ist, in das Kartuschenrohr eingepresst wird.

Gegenstand der Erfindung ist schließlich die Verwendung einer Kartusche mit den oben beschriebenen Merkmalen in einer Anlage für die Flüssigkeitschromatographie zur chromatographischen Trennung mindestens zweier Substanzen.

### Kurze Beschreibung der Abbildungen

Die Abbildung 1 zeigt einen Längsschnitt durch ein Kartuschenrohr (1), in dessen beide Enden Endstücke (2) mit Siebelementen (3) eingefügt sind.

Die Abbildung 2 zeigt einen Längsschnitt durch ein Trennsäulenkartuschenrohr (1), auf das ein Vorsäulenkartuschenrohr (4) aufgesetzt ist. Die Enden beider Kartuschenrohre sind jeweils mit Endstücken (2) mit Siebelementen (3) verschlossen. Ein Zwischenstück (5) verbindet Vor- und Trennsäulenkartusche.

Die Abbildung 3 zeigt im Längsschnitt das Einbringen von Endstücken mit Siebelementen in ein Kartuschenrohr.

Die Abbildung 4 zeigt eine graphische Darstellung von chromatographischen Kenndaten (A: Symmetriekennzahl für Eluentenpeak; B: Anzahl der Trennböden /m; C: Bodenhöhe) im Laufe eines Belastungstests.

Die Abbildung 5 zeigt die Auftrennung eines Testgemisches (A: Phthalsäuredimethylester (PDM); B: Phthalsäurediethylester (PDE); C: Phthalsäuredibutylester (PDB)) vor (oben) und nach (unten) einem Belastungstest.

### Beschreibung der Erfindung

Das erfindungsgemäße Kartuschenrohr besteht aus einem zylindrischen Rohr aus Materialien, wie sie für Chromatographierohre üblich sind; dazu gehören insbesondere Edelstahl, druckstabiler Kunststoff, Glas oder Aluminium. Für analytische Anwendungen beträgt der Innendurchmesser zwischen wenigen Millimetern und einem Zentimeter; bei präparativen Anwendungen werden größere Innendurchmesser benutzt: typischerweise 2 - 30 cm, in Einzelfällen noch darüber hinaus. Die Wandstärke des Kartuschenrohres richtet sich in dem Fachmann bekannter Weise nach dem Material, der Säulengröße und dem vorgesehenen Arbeitsdruck; sie beträgt üblicherweise einige Millimeter. Die Länge des Kartuschenrohres beträgt in Übereinstimmung mit der Anwendung von wenigen Millimetern oder Zentimetern (Vorsäulen oder Säulen für die Probenvorbereitung) bis zu 10 - 100 cm (Trennsäulen). In Sonderfällen sind noch längere Trennsäulen üblich. Das erfindungsgemäße Kartuschenrohr ist ein glattes Zylinderrohr ohne zusätzliche Elemente wie Gewinde, Ringnuten, Ringwülste oder Flansche.

Das erfindungsgemäße Endstück für die Kartusche (siehe Abbildung 1) besteht aus Kunststoff, der beständig gegen die vorgesehenen Lösungsmittel ist. Die Auswahl geeigneter Kunststoffe ist dem Fachmann geläufig. Bevorzugtes Material ist PTFE (Teflon). Die Grundform des Endstückes ist ein Zylinder mit einer zentralen Bohrung (6) für das Elutionsmittel. Der Außendurchmesser des Endstückes besitzt stets ein Aufmaß gegenüber dem Innendurchmesser des Kartuschenrohres (1). Die Größe dieses Aufmaßes richtet sich nach dem Durchmesser des Endstückes und der Kompressibilität des Materials des Endstückes. Beispielsweise weist der Grundkörper des Endstückes bei Verwendung von Teflon als Material in Abhängigkeit vom Durchmesser des Rohres folgende Aufmaße auf:

| | | | |
|---|---|---|---|
| Innendurchmesser (mm) | 25 | 50 | 100 |
| Aufmaß (mm) | 0,3-0,5 | 0,6-0,8 | 0,9-1,1 |

Für größere Rohrdurchmesser vergrößert sich das Aufmaß über die genannten Werte hinaus. Das in diesem Beispiel für die Endstücke benutzte Material (PTFE) besitzt folgende mechanische Eigenschaften:
Elastizitätsmodul (kg/cm²): 3500 - 5000
Shorehärte (nach D ASTM D 676; D Skala): 50-60
Verformung bei Druckbelastung (70 kg/cm²; 23 °C; 24 h): 3 - 6
Werden andere Materialien für den Grundkörper des Endstückes verwendet, so wird das jeweilige Aufmaß den mechanischen Eigenschaften des Materials angepaßt, um auf diese Weise denselben Anpressdruck zu erreichen. Derartige Optimierungen sind dem Fachmann geläufig.

Die Dichtwirkung zwischen Kartuschenrohr und Endstück entsteht durch die Verformungskräfte des im wesentlichen zylindrischen Endstückes, wobei diese Kräfte in radialer Richtung wirken.

Auf der dem Sorbensbett zugewandten Seite des Endstückes befindet sich bevorzugterweise eine kegelstumpfförmige Aussparung (7), an deren Grund sich eine flach-zylindrische Aussparung für das Siebelement (3) befindet. Das Siebelement besteht aus Materialien, die für diesen Zweck in der Flüssigkeitschromatographie bekannt sind, beispielsweise Fritten aus Kunststoff, wie Teflon, oder Metall, wie rostfreiem Stahl, oder auch Papier oder Gewebe aus Polypropylen oder Nylon. Das erfindungsgemäße Verfahren der Umbördelung erzeugt einen dicht schließenden Übergangsbereich zwischen Siebelement und Endstück, auch bei weichen Materialien für Siebelemente.

Auf der dem Sorbensbett abgewandten Seite des Endstückes befindet sich eine Vorrichtung, an die direkt oder indirekt die Zu- und Ableitungen für das Elutionsmittel angeschlossen werden können. Bevorzugt ist eine zylindrische Aussparung (8), in die ein Kupplungsstück eingreift, das die Zu- und Ableitungen trägt, und das zusammen mit der Kartusche in die Halterung eingespannt wird.

Erfindungsgemäß wird das Endstück mit Siebelement für das Kartuschenrohr durch folgende Arbeitsschritte hergestellt:
a) Herstellen eines Rohlings aus einem Kunststoff, beispielsweise aus Teflon, mit einer zentralen Bohrung und mit einer Aussparung für das Siebelement durch übliche Formgebungsverfahren;
b) Einlegen des Siebelementes in die dafür vorgesehene Aussparung;
c) Einspannen des Rohlings mit dem Siebelement in eine Drehbank;
d) Umfahren des Rohlings mit einem Druckrädchen an dem Ende, an dem sich das Siebelement befindet;
   (Bei diesem Arbeitsschritt wird der äußere Rand des Rohlings umgebördelt und klemmt das Siebelement fest, ohne daß weitere Befestigungselemente für das Siebelement notwendig wären.)
e) endgültige Formgebung für das Endstück (Außendurchmesser, Anschlußvorrichtung für Elutionsmittelzu- und -ableitung).
Dieses Herstellverfahren erlaubt es, nicht nur starre, sondern auch dünne Siebelemente aus weichem Material in das Endstück einzufügen.

Die vollständige Kartusche (siehe Abbildung 1) besteht aus dem Kartuschenrohr (1), zwei Endstücken (2) jeweils mit Siebelementen (3) und der Sorbensfüllung (9), wobei alle in der Flüssigkeitschromatographie üblichen Sorbentien verwendet werden können.

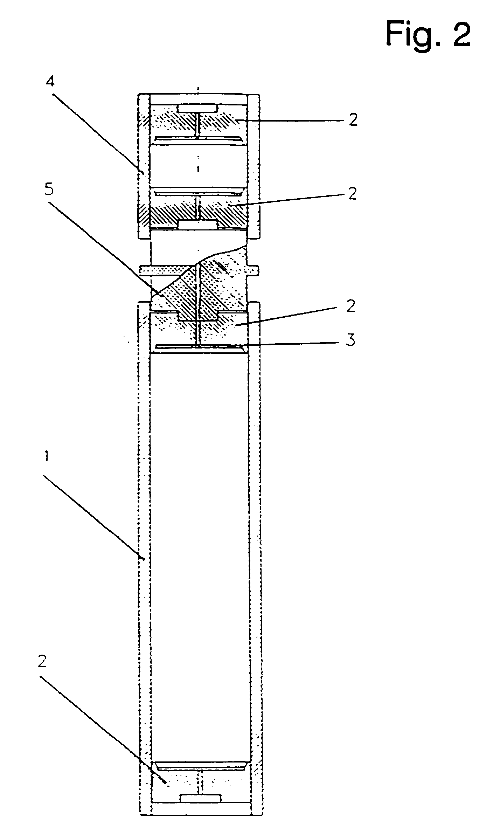

Die erfindungsgemäßen Kartuschen werden zusammen mit den Anschlußstücken für Zu- und Ablauf von Elutionsmittel in eine geeignete Einspannvorrichtung eingebaut; derartige Einspannvorrichtungen sind kommerziell erhältlich. Dabei wird gegebenenfalls neben der Trennsäulenkartusche (1) eine Vorsäulenkartusche (4) zusammen mit einem Verbindungsstück (5) eingebaut (siehe Abbildung 2). Weitere für die Flüssigkeitschromatographie übliche Zusatzeinrichtungen werden gegebenenfalls in bekannter Weise angeschlossen; dazu gehören Probenauftragevorrichtungen, Eluentenpumpen, Vorrichtungen zur Gradientenerzeugung, Detektoreinrichtung, Fraktionssammler.

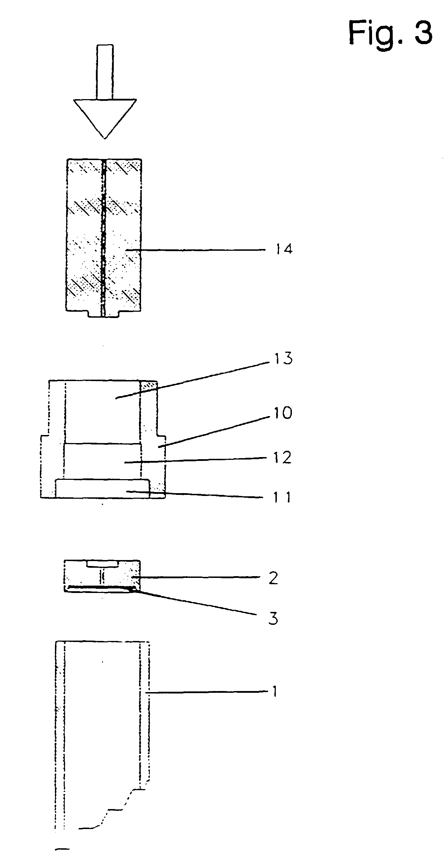

Da das Endstück gegenüber dem Kartuschenrohr ein Aufmaß besitzt, muß es mittels eines Werkzeuges in das Rohr eingepreßt werden, wobei dieses Werkzeug das Endstück führt und verhindert, daß es verkantet. Ein geeignetes Werkzeug besteht beispielsweise aus einem Teil, das auf das Kartuschenrohr aufgesetzt wird und einem trichterförmigen Ansatz, in den das Endstück mit Siebelement eingeführt wird. Der Zusammenbau einer Kartusche, wobei eine abgewandelte Ausführungsform für ein derartiges Werkzeug verwendet wird, ist in Abbildung 3 dargestellt. Diese Variante des Werkzeuges ist im wesentlichen ein Hohlzylinder (10). Dessen unterster Teil (11) paßt auf das Kartuschenrohr (1). Im mittleren Bereich (12) ist der Innendurchmesser so gewählt, daß das Endstück (2) eingelegt werden kann. Der obere Teil (13) dient als Führung für einen Preßstempel (14). Dieses Werkzeug wird aus üblichen Materialien, beispielsweise Edelstahl oder Kunststoff hergestellt.

Wie bereits beschrieben, werden die Endstücke hergestellt, wobei die Siebelemente in diese eingefügt werden. Anschließend wird, wie aus Abbildung 3 ersichtlich, ein Endstück (2) mit Siebelement (3), ein Kartuschenrohr (1) und der Preßstempel (14) in das Werkzeug eingelegt und mit einer hydraulischen Presse das Endstück in das Kartuschenrohr bei einem Druck zwischen 5 und 40 bar eingepreßt. Der Pfeil in Abbildung 3 repräsentiert diesen Vorgang.

Das Kartuschenrohr, in das ein Endstück eingepresst ist, wird umgedreht und das Sorbens anschließend nach üblichen Methoden, beispielsweise als Suspension in einem Lösungsmittel, eingefüllt. Dann wird ein zweites Endstück eingebracht und das Sorbensbett gegebenenfalls zusätzlich mit einem Druck zwischen 10 und 80 bar verpresst, wodurch die Druckstabilität des Sorbensbettes verbessert wird.

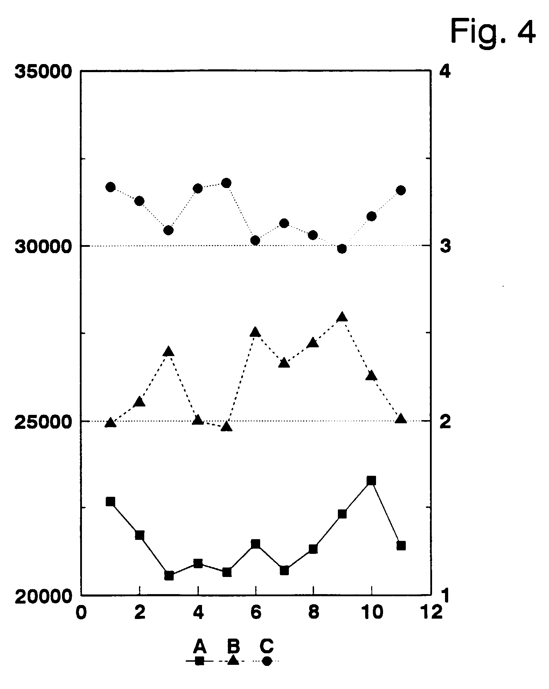

Die überragende Stabilität einer erfindungsgemäßen Kartusche wird durch folgendes Experiment belegt; die Ergebnisse, die jeweils nach den Behandlungsschritten 1 - 11 erhalten wurden, sind mittels der Kennzahlen für das Trennungsverhalten in Abbildung 4 dargestellt; Kurve A (rechte Ordinate): Symmetrieverhältnis, Kurve B (linke Ordinate); Anzahl der theoretischen Böden pro Meter, Kurve C (rechte Ordinate): Bodenhöhe bezogen auf den Partikeldurchmesser:
Mit einer frisch hergestellten Kartusche (Länge 250 mm; Durchmesser 50 mm; gefüllt mit LiChrospher^{R} RP-18; 12 µm) wurde ein Testchromatogramm erstellt (1) und nach zwei Tagen wiederholt (2). Die Kartusche wurde ausgebaut und wieder eingespannt (3). Die Kartusche wurde ausgebaut, zwei Stunden geschüttelt und wieder eingespannt (4). Die Kartusche wurde ausgebaut, drei Stunden auf einem Gabelstapler zusammen mit anderem Transportgut transportiert und wieder eingespannt (5). Die Kartusche wurde ausgebaut, 40 Stunden auf einem Gabelstapler zusammen mit anderem Transportgut transportiert und wieder eingespannt (6). Die Kartusche wurde ausgebaut, 12 Stunden im Trockenschrank bei 40 °C aufbewahrt und wieder eingespannt (7). Die Kartusche wurde ausgebaut, 10 Minuten bei 20 °C in einem Ultraschallbad beschallt und wieder eingespannt (8). Die Kartusche wurde ausgebaut, 30 Minuten bei 70 °C in einem Ultraschallbad beschallt und wieder eingespannt (9). Die Kartusche wurde ausgebaut, 20 Stunden bei -17 °C in einer Tiefkühltruhe aufbewahrt und wieder eingespannt (10). Schließlich wurde die Kartusche für 65 Stunden mit einem Fluß von 140 ml/min betastet (11).

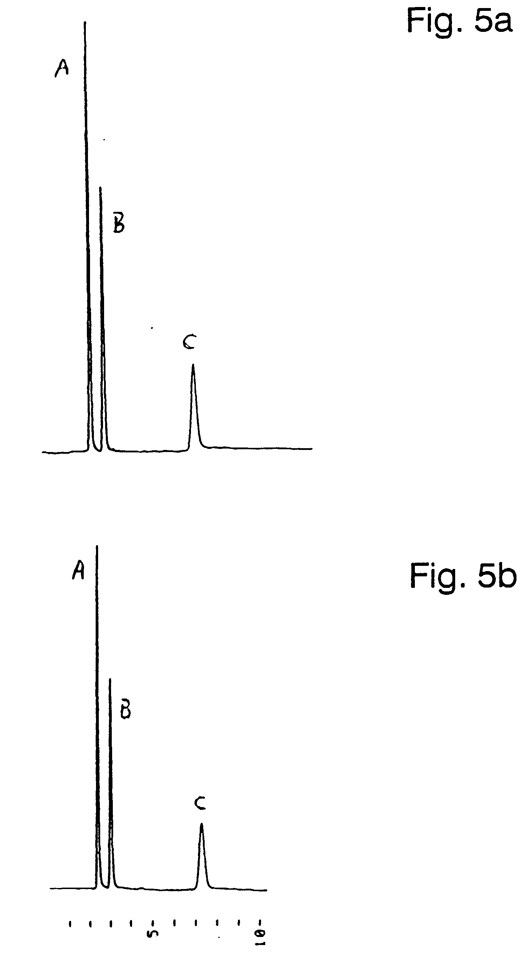

Die Abbildung 5 zeigt die Auftrennung eines Testgemisches (40 µl; A: Phthalsäuredimethylester (PDM); B: Phthalsäurediethylester (PDE); C: Phthalsäuredibutylester (PDB)) vor (oben) dem oben beschriebenen Belastungstest und nach (unten) Schritt 11 des oben beschriebenen Belastungstests. Als Elutionsmittel diente Methanol-Wasser (80:20; V:V).

Die Daten zeigen, daß das Trennvermögen der Kartusche trotz der extremen Belastungen unverändert gut blieb. Die erfindungsgemäße Kartusche zeichnet sich also durch eine hervorragende Packungsstabilität aus. Dabei ist wichtig, daß die Lage des Endstückes der Länge des Sorbensbettes angepaßt werden kann und das Sorbensbett bei Bedarf zusätzlich verpresst werden kann. Dadurch daß die Endstücke ein deutliches Übermaß aufweisen, sitzen sie fest im Kartuschenrohr und müssen nicht zusätzlich in ihrer Lage fixiert werden. Außerdem ist die Konstruktion überraschend einfach, es werden z.B. keine zusätzlichen Dichtelemente, wie O-Ringe oder Lippendichtungen benötigt. Das Endstück einschließlich des Siebelementes besteht nur aus zwei Teilen:

Dem im wesentlichen zylindrischen Grundkörper und dem durch eine Umbördelung des Grundkörpers gehaltenen Siebelement.

Auch ohne weitere Ausführungen wird davon ausgegangen, daß ein Fachmann die obige Beschreibung in weitestem Umfang nutzen kann. Die bevorzugten Ausführungsformen sind deswegen lediglich als beschreibende Offenbarung aufzufassen.

## Patentansprüche

1. Kartuschenrohr für die Flüssigkeitschromatographie, bestehend aus einem Rohr (1) und einem Endstück (2) mit Siebelement (3), wobei das Endstück aus einem im wesentlichen zylindrischen Grundkörper mit einer zentralen Bohrung (6) und einer flach-zylindrischen Ausfräsung für das Siebelement besteht, der Grundkörper eine Umbördelung aufweist, die das Siebelement festhält, und der zylindrische Grundkörper einen glatten Zylindermantel aufweist, dadurch gekennzeichnet, daß das Endstück (2) einteilig ist, unter Druck in das Rohr eingepreßt wurde und durch Reibungskräfte in dem Rohr gehalten wird, und im demontierten Zustand der Außendurchmesser des Endstückes größer als der Innendurchmesser des Rohres (1) ist.

2. Verfahren zur Herstellung eines Kartuschenrohres nach Anspruch 1 mit folgenden Verfahrensschritten:
a) Herstellen eines Rohlings aus einem Kunststoff, beispielsweise aus Teflon, mit einer zentralen Bohrung und mit einer Aussparung für das Siebelement durch übliche Formgebungsverfahren;
b) Einlegen des Siebelementes in die dafür vorgesehene Aussparung;
c) Umbördelung des Rohlings an dem Ende, an dem sich das Siebelement befindet, wobei radialer Druck zur Verformung ausgeübt wird;
d) endgültige Formgebung für das Endstück (Außendurchmesser, Anschlußvorrichtung für Elutionsmittelzu- und -ableitung), wobei der Außendurchmesser des Endstückes größer als der Innendurchmesser des Rohres ist; e) Einpressen des Endstückes unter Druck in das Rohr.

## Claims

1. Cartridge tube for liquid chromatography, consisting of a tube (1) and an end piece (2) having a sieve element (3), the end piece consisting of an essentially cylindrical base body having a central bore (6) and a flat cylindrical milled recess for the sieve element, the base body having a bead which firmly holds the sieve element, and the cylindrical base body having a smooth cylindrical jacket, characterized in that the end piece (2) is in one piece, was pressed into the tube under pressure and is held in the tube by frictional forces, and, in the disassembled state, the external diameter of the end piece is greater than the internal diameter of the tube (1).

2. Method for producing a cartridge tube according to Claim 1, having the following procedural steps:
a) preparing a shaped blank made of plastic, for example of Teflon, having a central bore and a recess for the sieve element, by conventional shaping processes;
b) inserting the sieve element into the recess provided for this purpose;
c) beading the shaped blank on the end where the sieve element is located, radial pressure being exerted for the deformation;
d) final shaping of the end piece (external diameter, connection device for eluting agent supply and discharge line), the external diameter of the end piece being greater than the internal diameter of the tube;
e) pressing the end piece into the tube under pressure.

## Revendications

1. Tube à cartouche pour la chromatographie en phase liquide, comprenant un tube (1) et un embout (2) avec élément filtrant (3), l'embout comprenant un corps de base sensiblement cylindrique avec un perçage central (6) et un fraisage plat et cylindrique pour l'élément filtrant, le corps de base présentant un bord rabattu qui maintient l'élément filtrant, et le corps de base cylindrique présentant une enveloppe de cylindre lisse, caractérisé en ce que l'embout (2) est d'une seule pièce, a été enfoncé sous pression dans le tube et est maintenu par des forces de frottement dans le tube, et le diamètre extérieur de l'embout est supérieur au diamètre intérieur du tube (1) à l'état démonté.

2. Procédé pour fabriquer un tube à cartouche selon la revendication 1 avec les étapes de procédé suivantes :
a) fabrication d'une ébauche en plastique, par exemple en Téflon, avec un perçage central et un évidement pour l'élément filtrant par des procédés de façonnage classiques ;
b) insertion de l'élément filtrant dans l'évidement prévu à cet effet ;
c) bordelage de l'ébauche sur l'extrémité sur laquelle se trouve l'élément filtrant, en exerçant une pression radiale pour la déformation ;
d) façonnage définitif pour l'embout (diamètre extérieur, dispositif de raccordement pour l'alimentation et l'évacuation du produit d'élution), le diamètre extérieur de l'embout étant supérieur au diamètre intérieur du tube ;
e) enfoncement de l'embout sous pression dans le tube.
